# EUROPÄISCHE PATENTSCHRIFT

(11) **EP 3 011 297 B1**
(45) Veröffentlichungstag und Bekanntmachung des Hinweises auf die Patenterteilung: **01.04.2020**
(21) Anmeldenummer: 14748205.3
(22) Anmeldetag: 05.08.2014
(51) Int. Cl.: G01N 3/30, G01M 7/08

(54) **MESSVORRICHTUNG MIT FERNSTEUERUNG**
MEASURING APPARATUS WITH REMOTE CONTROL
DISPOSITIF DE MESURE À TÉLÉCOMMANDE

(30) Priorität: 12.08.2013 DE 102013215932
(43) Veröffentlichungstag der Anmeldung: 27.04.2016
(73) Patentinhaber: Rosenberger Hochfrequenztechnik GmbH & Co. KG, 83413 Fridolfing (DE)
(72) Erfinder: SCHWAB, Martin, 82538 Geretsried-Gelting (DE)
(74) Vertreter: Prüfer & Partner mbB Patentanwälte · Rechtsanwälte
(86) Internationale Anmeldenummer: PCT/EP2014/066862
(87) Internationale Veröffentlichungsnummer: WO 2015/022241

(56) Entgegenhaltungen:
- EP-A1- 0 351 430
- US-A1- 2009 095 050
- US-B1- 6 748 791
- US-B2- 7 146 846

## Beschreibung

Die vorliegende Erfindung betrifft Messsysteme für hochfrequente Kommunikationssysteme, im Speziellen Messvorrichtungen zur Messung von passiver Intermodulation.

Die Qualität einer Verbindung zwischen einer fest installierten Sende- und Empfangseinrichtung (BTS, base transceiver station) und einem Endgerät (UE, user equipment) spielt in heutigen Mobilfunknetzen eine wesentliche Rolle. Durch die hohe erzeugte Leistung in der BTS einerseits und die notwendige Empfindlichkeit der Empfänger der BTS und UE andererseits können Störungen im Übertragungsweg die Empfindlichkeit der Empfänger und damit die Qualität der Verbindung wesentlich beeinflussen.

Ein maßgeblicher Effekt, welcher Störungen im Übertragungsweg hervorruft, ist die Intermodulation. Dabei erzeugen beispielsweise zwei Sendesignale mit zwei verschiedenen Trägerfrequenzen, welche mit hoher Leistung in einer BTS erzeugt werden, durch Intermodulation an Stellen mit nichtlinearem Übertragungsverhalten (oft einfach "Nichtlinearitäten" genannt) Störungen, deren Frequenzen Summen und Differenzen ganzzahliger Vielfacher der Frequenzen der Sendesignale sind. Ein Teil dieser Störungen kann in das Empfangsband der BTS fallen und damit die Qualität der Kommunikation beeinträchtigen. Werden diese Störungen an passiven Elementen erzeugt, spricht man von passiver Intermodulation (PIM).

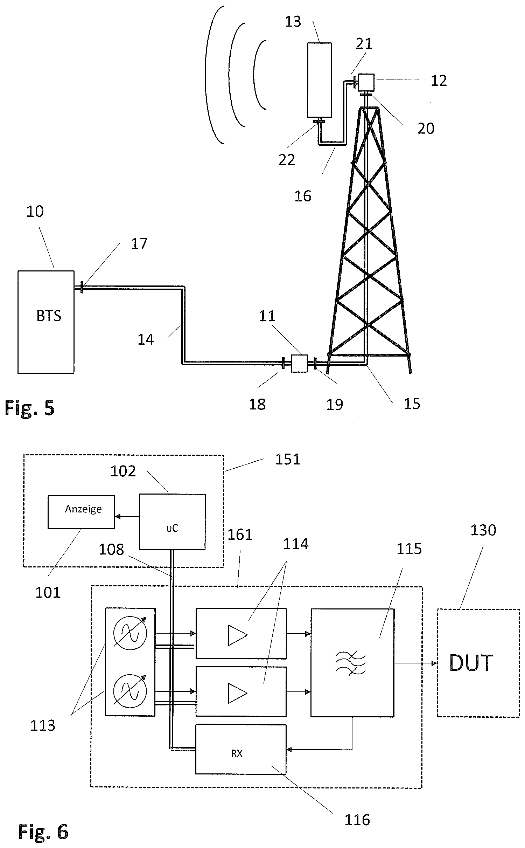

Fig. 5 ist eine schematische Darstellung, die einen Übertragungsweg von einer BTS bis zu einer Antenne zeigt. Die BTS 10 ist über ein erstes Filter 11 und ein zweites Filter 12 mit der Antenne 13 verbunden. Die BTS 10, die Filter 11 und 12 und die Antenne 13 sind über Hochfrequenzkabel 14, 15 und 16 miteinander verbunden, die über Hochfrequenzverbinder 17 bis 22 an die jeweiligen Elemente angeschlossen sind. In allen Komponenten 11 bis 22 des Übertragungsweges kann PIM auftreten. Beispielsweise können Korrosion in Steckverbindern, Oxydschichten an Kontakten und Metall-Metall-Übergängen, Verunreinigungen in Materialien und ungenügend befestigte Steckverbindungen PIM hervorrufen.

Zur Sicherstellung und Überprüfung der Qualität der Übertragungseinrichtung werden Messungen der PIM durchgeführt. Da PIM insbesondere bei hohen Leistungen auftritt, wird diese in der Regel bei Anwendung von hoher Sendeleistung, z.B. 2 * 20 W, gemessen.

Fig. 6 ist ein Blockdiagramm, das den Aufbau einer bekannten PIM-Testvorrichtung (PIM-Analysator) zeigt. Sie besteht aus einer Steuereinheit 151 und einer Signaleinheit 161. In der Signaleinheit 161 werden dabei zwei Hochfrequenzsignale mit geeigneten unterschiedlichen Frequenzen in zwei Signalgeneratoren 113 erzeugt und in zwei Leistungsverstärkern 114 verstärkt. In einem Filter 115 werden die beiden Sendesignale kombiniert und dem zu testenden Objekt 130 (DUT, device under test) zugeführt. Die im DUT auftretende PIM wird in dem Filter 115 selektiert und in einem Messempfänger 116 detektiert und vermessen. Die Steuerung, die Auswertung der Messergebnisse und deren Darstellung erfolgt in der Steuereinheit 151, die einen Rechner 102, beispielsweise einen Standard-PC oder einen Mikrocontroller (µC), und eine Anzeige 101 wie z.B. einen Monitor enthält.

In AU 2012 254 886 A1 ist eine PIM-Testvorrichtung offenbart, deren Aufbau ähnlich dem oben beschriebenen ist.

Bei dem in Fig. 5 dargestellten Beispiel bildet der gesamte Übertragungspfad zwischen der BTS 10 und der Antenne 13 das zu testende Objekt (DUT). Zur Messung wird daher die PIM-Testvorrichtung anstelle der BTS 10 über den Hochfrequenzverbinder 17 mit dem Hochfrequenzkabel 14 verbunden.

Um Störungen, welche beispielsweise durch ungenügend befestigte Stecker, oxidierte Kontakte und Verunreinigungen hervorgerufen wurden, zu stimulieren und zu lokalisieren, werden die Elemente im Übertragungspfad oftmals mechanisch beansprucht, beispielsweise durch Klopfen auf Steckkontakte, wodurch mechanische Erschütterungen hervorgerufen werden. Die dabei auftretende Störung wird kontinuierlich gemessen und angezeigt. Erhöht sich beim Klopfen auf eine Stelle die PIM deutlich, ist das ein Zeichen dafür, dass diese Stelle eine Störstelle im Übertragungsweg bildet.

Durch den hohen Leistungsverbrauch insbesondere der Leistungsverstärker und durch die angewandte Messmethode, bei der die Leistungsverstärker kontinuierlich in Betrieb sind, während der Reihe nach die einzelnen Kontaktstellen abgeklopft werden, ergibt sich ein hoher Gesamtenergiebedarf.

Besonders für die Überprüfung von Übertragungspfaden mit eingeschränktem Zugang, wie dies auf Antennenmasten oder in Gebäuden in Deckeninstallationen der Fall ist, sind einfach zu handhabende, leichte und portable Messgeräte notwendig. Verfügbar sind bisher jedoch nur relativ schwere Messgeräte, bei denen zum einen wegen des hohen Gesamtenergiebedarfs große Batterien oder Akkumulatoren eingesetzt sind, zum anderen aber auch wegen des hohen Leistungsverbrauchs und der dabei entstehenden Verlustleistung große und schwere Kühlkörper zum Abführen der Abwärme angebracht sind.

EP 0 351 430 A1 beschreibt ein Verfahren und eine Vorrichtung zum Inspizieren von Strukturen. Dabei ist ein Druck- oder Beschleunigungssensor an einem Hammer angebracht, der einen nichtzerstörenden Schlag auf ein zu messendes Material ausübt. Ein Signal, das durch den Schlag des Hammers auf das Material erzeugt wird, oder ein verarbeitetes Signal wird benutzt, um die Zeitspanne des Kontakts des Hammers mit dem Material anzugeben. Es werden auch Mittel beschrieben zum Verarbeiten der Signale für die Zeitmessung oder die Differenzierung sowie Mittel zum Wegnehmen der Stoßantriebskraft unter Verwendung eines Signals des Sensors, sobald der Hammer in Kontakt mit dem Material für die Messung kommt.

US 6,748,791 B1 beschreibt ein Verfahren und eine Vorrichtung zum Detektieren von Fehlern. Ein Prüfhammer ist über ein Kabel mit einem Messgerät verbunden. Das Signal eines in dem Prüfhammer enthaltenen Beschleunigungssensors wird über das Kabel zu dem Messgerät geleitet und dort ausgewertet, indem es mit einem niedrigen und einem hohen Schwellwerts verglichen wird. Es wird die die Zeitdauer zwischen dem Über- und Unterschreiten des niedrigen Schwellwerts gemessen und durch Vergleich mit dem hohen Schwellwert festgestellt, ob der Schlag hinreichend stark war.

US 7,146,846 beschreibt das zerstörungsfreie Testen der Querstangen hölzerner Stromleitungsmasten. Eine Messbox mit Beschleunigungssensor wird an einem Ende der Querstange angebracht, und gegen das andere Ende wird ein Schlag mit einem Prüfhammer ausgeübt, der ebenfalls einen Beschleunigungssensor enthält. Die Signale beider Sensoren werden an eine Datenverarbeitungseinrichtung übertragen und ausgewertet.

Die Aufgabe der vorliegenden Erfindung besteht darin, den Leistungsverbrauch von PIM-Testvorrichtungen erheblich zu senken, ihr Gewicht zu verringern und ihre Bedienung zu vereinfachen.

Die Aufgabe wird gelöst durch einen Prüfschlägel gemäß Anspruch 1, ein Testsystem gemäß Anspruch 5 und ein Messverfahren gemäß Anspruch 11. Weiterbildungen der Erfindung sind jeweils in den Unteransprüchen angegeben.

Gemäß der vorliegenden Erfindung können Komponenten der Messvorrichtung, die einen hohen Leistungsverbrauch haben, im Dauerzustand ausgeschaltet sein und mittels Fernbedienung nur dann eingeschaltet werden, wenn der Bewegungssensor in dem Prüfschlägel ein Steuersignal an die Messvorrichtung zum Einschalten dieser Komponenten schickt. Dadurch kann der Leistungsverbrauch der Messvorrichtung verringert und die Betriebsdauer erhöht werden. Durch den verringerten Leistungsverbrauch können kleinere Batterien und kleinere Kühlkörper verwendet werden, wodurch das Gewicht der Vorrichtung verringert sein kann. Weiter wird die Bedienung der Messvorrichtung erleichtert. Vorzugsweise wird das Ergebnis der Messung direkt an dem Prüfschlägel angezeigt. Weitere Merkmale und Zweckmäßigkeiten der Erfindung ergeben sich aus der Beschreibung von Ausführungsbeispielen anhand der beigefügten Zeichnungen.
- Fig. 1: ist eine schematische Darstellung, die ein Testsystem gemäß einer Ausführungsform der vorliegenden Erfindung zeigt.
- Fig. 2: ist ein Blockdiagramm, das detaillierter den Aufbau des in Fig. 1 schematisch gezeigten Testsystems zeigt.
- Fig. 3: ist ein Zeitdiagramm, das einen Messzyklus des in Fig. 1 und 2 gezeigten Testsystems zeigt.
- Fig. 4: ist eine schematische Darstellung, die ein Beispiel für eine Funktionsweise von Anzeigeelementen an einem in Fig. 1 und 2 gezeigten Prüfschlägel zeigt.
- Fig. 5: ist eine schematische Darstellung, die einen Übertragungsweg von einer BTS bis zu einer Antenne zeigt.
- Fig. 6: ist ein Blockdiagramm, das den Aufbau einer bekannten PIM-Testvorrichtung zeigt.

Im Folgenden wird mit Bezug auf die beigefügten Figuren eine Ausführungsform der vorliegenden Erfindung im Detail beschreiben.

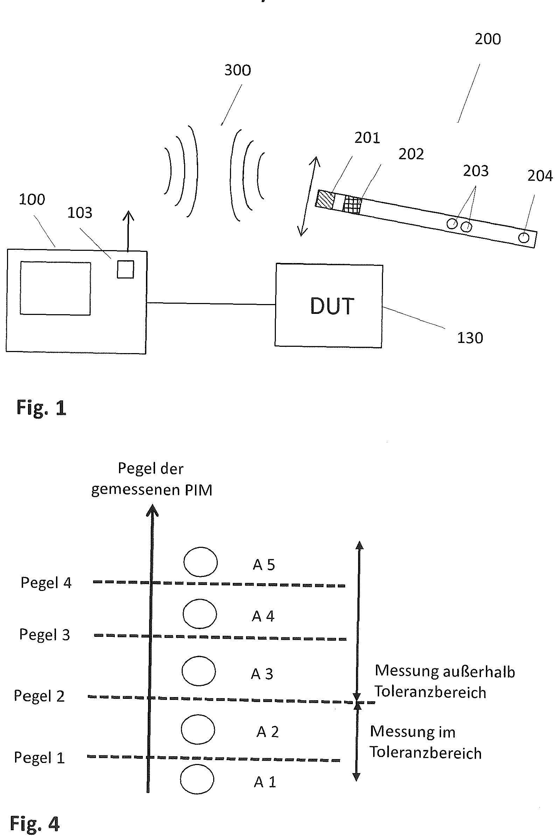

Fig. 1 ist eine schematische Darstellung, die ein Testsystem gemäß einer Ausführungsform der vorliegenden Erfindung zeigt. Eine Messvorrichtung 100, die als PIM-Analysator ausgebildet ist, ist mit dem zu testenden Objekt (DUT) 130 verbunden. Das DUT kann beispielsweise ein Übertragungspfad zwischen einer BTS 10 und einer Antenne 13 sein, wie er in Fig. 5 dargestellt und in der Beschreibungseinleitung beschrieben ist. In diesem Fall ist die Messvorrichtung 100 beispielsweise über den Hochfrequenzverbinder 17 mit dem Hochfrequenzkabel 14 verbunden.

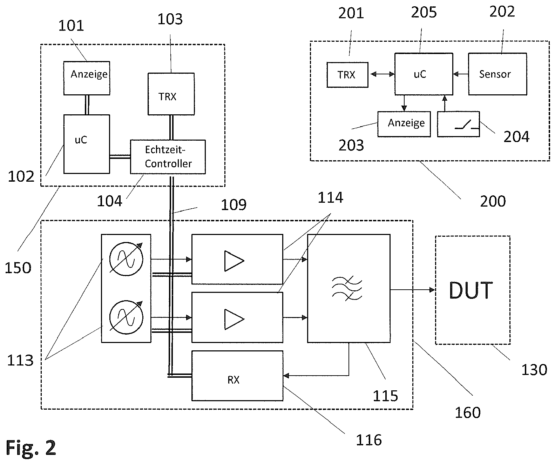

Das Werkzeug, mit dem einzelne Stellen des Übertragungspfads abgeklopft werden, ist gemäß der vorliegenden Erfindung als Prüfschlägel 200 ausgebildet. Der Prüfschlägel 200 enthält ein Übertragungsmodul 201, einen Bewegungssensor 202, einen oder mehrere Anzeigenelemente 203 (in Fig. 2 sind zwei Anzeigenelemente dargestellt) und zumindest einen Taster 204. Über das Übertragungsmodul 201, einen Funkkanal 300 und ein in der Messvorrichtung 100 enthaltenes Übertragungsmodul 103 sind der Prüfschlägel 200 und die Messvorrichtung 100 miteinander verbunden.

Fig. 2 ist ein Blockdiagramm, das detaillierter den Aufbau des in Fig. 1 schematisch gezeigten Testsystems zeigt.

In dem Prüfschlägel 200 sind das Übertragungsmodul 201, der Bewegungssensor 202, die Anzeigenelemente 203 und der Taster 204 mit einem Mikrocontroller (µC) 205 verbunden, der den Betrieb des Prüfschlägels 200 steuert.

Der fernsteuerbare PIM-Analysator 100 besteht aus einer Steuereinheit 150 und einer Signaleinheit 160, die mittels eines Signalbusses 109 miteinander verbunden sind.

In der Signaleinheit 160 werden zwei Hochfrequenzsignale mit geeigneten unterschiedlichen Frequenzen und in zwei Signalgeneratoren 113 erzeugt und in zwei Leistungsverstärkern 114 verstärkt. In einem Filter 115 werden die beiden Sendesignale kombiniert und als Testsignal zu dem DUT 130 gesendet. Die im DUT auftretende PIM wird in dem Filter 115 selektiert und als Messsignal in einem Messempfänger 116 detektiert und vermessen. Für das Filter 115 werden klassischerweise Duplexfilter verwendet, die in Senderichtung und Empfangsrichtung unterschiedliche Durchlassbereiche haben.

Die Steuerung, die Auswertung der Messergebnisse und deren Darstellung erfolgt in der Steuereinheit 150. Diese enthält eine Anzeige 101, einen Rechner 102 in Form eines Mikrocontrollers (µC), ein Übertragungsmodul 103 und einen Echtzeitcontroller 104. Ein Signalbus 109 zur Steuerung der Signaleinheit 160 ist mit dem Echtzeitcontroller 104 verbunden.

Der Begriff "Echtzeit" (englisch real-time) bezieht sich im Rahmen der Informationstechnik auf Systeme, die bestimmte Ergebnisse zuverlässig innerhalb einer vorbestimmten Zeitspanne liefern können. In DIN 44300 ist der Begriff "Echtzeit" definiert als "... Betrieb eines Rechensystems, bei dem Programme zur Verarbeitung anfallender Daten ständig betriebsbereit sind, derart, dass die Verarbeitungsergebnisse innerhalb einer vorgegebenen Zeitspanne verfügbar sind. Im Rahmen der vorliegenden Erfindung bezieht sich dieser Begriff darauf, dass der Echtzeitcontroller 104 dazu geeignet sein muss, verschiedene Komponenten als Reaktion auf ein von außen empfangenes Steuersignal zuverlässig innerhalb einer vorbestimmten kurzen Zeitspanne in einen Energiesparmodus zu schalten bzw. aus ihm herauszuholen.

Die Messvorrichtung 100 hat drei Betriebsarten: einen Messbetrieb, in dem alle Einheiten eingeschaltet und betriebsbereit sind, einen ersten Energiesparmodus, in dem nur die besonders viel Leistung verbrauchenden Komponenten in den Energiesparmodus geschaltet sind, und einen zweiten Energiesparmodus, in dem ein weiterer Teil der Komponenten der Messvorrichtung 100 in den Energiesparmodus geschaltet sind. Insbesondere sind in der Messvorrichtung 100 im ersten Energiesparmodus die Leistungsverstärker 114 in den Energiesparmodus geschaltet, während in dem zweiten Energiesparmodus zusätzlich die Signalgeneratoren 113, der Messempfänger 116, der Mikrocontroller 102 und die anzeige 101 in den Energiesparmodus geschaltet sind. Das Übertragungsmodul 103 und der Echtzeitcontroller 104 bleiben immer in Betrieb, um Steuersignale von außen empfangen zu können und als Reaktion auf die Steuersignale die einzelnen Komponenten der Messvorrichtung 100 über interne Steuerbusse und den Signalbus 109 schnell aus dem Energiesparmodus holen zu können.

Besonders zeitkritisch ist dabei das Herausholen der Leistungsverstärker 114 aus dem Energiesparmodus. Um eine hohe Einsparung des Energieverbrauchs zu erzielen, werden diese leistungsintensiven Komponenten erst unmittelbar vor dem Klopfen auf die zu testende Stelle des zu testenden Objekts 130 eingeschaltet. Dazu wird über den in dem Prüfschlägel 200 enthaltenen Bewegungssensor 202 ein Signal erfasst, das den Beginn eines Schlags anzeigt, daraufhin ein Steuersignal über die Funkverbindung an die Messvorrichtung 100 übertragen und als Reaktion auf den Empfang dieses Steuersignals die Leistungsverstärker 114 eingeschaltet. Damit noch vor dem Aufprall des Prüfschlägels 200 ein Testsignal an das zu testende Objekt 130 ausgegeben werden kann, muss der Echtzeitcontroller 104 in der Lage sein, die Leistungsverstärker 114 in weniger als 100 ms nach Empfang des Steuersignals aus dem Energiesparmodus herauszuholen, vorzugsweise in weniger als 50 ms, in weiter bevorzugter Weise in weniger als 20 ms und in noch weiter bevorzugter Weise in weniger als 10 ms.

Wenn der Echtzeitcontroller 104 damit auch in der Lage ist, die Leistungsverstärker 114 innerhalb einer entsprechenden Zeitspanne in den Energiesparmodus zu versetzen und auch die anderen Komponenten einer entsprechenden Zeitspanne aus dem Energiesparmodus herauszuholen oder in ihn zu versetzen, ist die Geschwindigkeit des Echtzeitcontrollers 104 für das Herausholen Leistungsverstärker 114 aus dem Energiesparmodus von besonderer Bedeutung.

Im folgenden wird ein Messzyklus zum Messen von PIM mit dem oben beschriebenen Testsystem beschrieben.

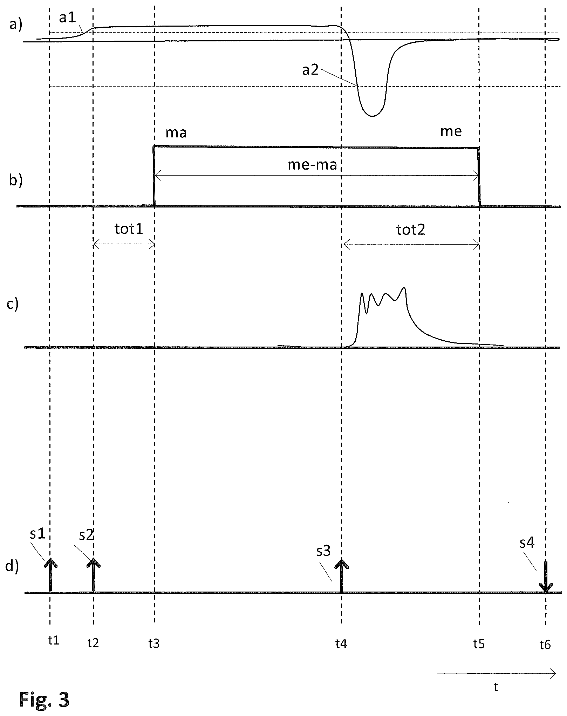

Fig. 3 ist ein nicht maßstäbliches Zeitdiagramm, das einen Messzyklus des in Fig. 1 und 2 gezeigten Testsystems zeigt, wenn ein Beschleunigungssensor als Bewegungssensor 202 verwendet wird. Dabei zeigen die Signalverläufe
a) eine von dem Beschleunigungssensor 202 detektierte Beschleunigung,
b) eine Messdauer zwischen dem Anfang eines Messvorgangs (ma) und dem Ende des Messvorgangs (me),
c) einen Pegel einer auftretenden PIM-Störung und
d) von dem Prüfschlägel 202 übertragene und empfangene Signale.

Neben dem eigentlichen Messvorgang von ma bis me enthält der Messzyklus auch noch vorbereitende und nachbereitende Prozesse.

Vor dem Start eines Messzyklus befindet sich die Messvorrichtung 100 in dem zweiten Energiesparmodus, in dem außer den Leistungsverstärkern 114 noch weitere Komponenten abgeschaltet sind. Die Messvorrichtung 100 ist fest mit dem DUT 130 verbunden, während der Bediener sich zu den einzelnen Teststellen des DUTs 130 bewegt, beispielsweise zu de verschiedenen in Fig. 5 gezeigten Hochfrequenzverbindern 17 bis 22.

Wenn der Bediener eine Teststelle erreicht hat, betätigt er den Taster 204 zum Initiieren eines Messzyklusses (Zeitpunkt t1 in Fig. 3). Zu diesem Zeitpunkt wird durch den Mikrocontroller 205 und die Übertragungsmodule 201 und 103 ein Steuersignal s1 an die Steuereinheit 150 übertragen, das anzeigt, dass der Taster betätigt wurde (Tasterbetätigungsanzeigesignal). Bei Empfang dieses Tasterbetätigungsanzeigesignals holt der Echtzeitcontroller die Signalgeneratoren 113, den Messempfänger 116, den Mikrocontroller 102 und die Anzeige 101 aus dem Energiesparmodus. Diese Elemente haben einen vergleichsweise niedrigen Leistungsverbrauch, brauchen aber eine längere Vorlaufszeit, bevor die Messung beginnt. So müssen z.B. die Signalgeneratoren ein zu Beginn der Messung (ma) ein stabiles Signal liefern. Dieser Zustand entspricht also dem ersten Energiesparmodus, bei dem nur die besonders leistungsintensiven Elemente wie die Leistungsverstärker 114 im Energiesparmodus verbleiben.

Ab dem Zeitpunkt t1 misst der in dem Prüfschlägel enthaltene Mikrocontroller 205 alle Signale des Beschleunigungssensors 202. Wenn der Bediener zum Schlagen auf den zu testenden Abschnitt des DUT 130 ansetzt, z.B. auf einen der in Fig. 5 gezeigten Hochfrequenzverbinder 17 bis 22, wird die beim Versetzen des Prüfschlägels 200 Bewegung auftretende Beschleunigung (Geschwindigkeitszunahme) von dem Beschleunigungssensor 202 erfasst und durch den Mikrocontroller 205 ausgewertet. Überschreitet der Absolutwert der erfassten Beschleunigung einen vorbestimmten ersten Schwellenwert a1 (Zeitpunkt t2 in Fig. 3), wird ein zweites Steuersignal s2 an die Steuereinheit 150 übertragen, das anzeigt, dass ein Schlag mit dem Prüfschlägel 200 begonnen hat (Schlagbeginnanzeigesignal). Durch dieses zweite Steuersignal s2 wird in dem Echtzeitcontroller 104 ein Timer in Gang gesetzt, welcher nach einer ersten Totzeit tot1 (Einschaltverzögerung) die Leistungsverstärker 114 in Betrieb schaltet und somit die Messung startet (Zeitpunkt t3 = t2 + tot1 in Fig. 3). Im Gegensatz zu den anderen Komponenten reicht für die Leistungsverstärker 114 eine so kurze Vorlaufzeit vor dem Aufprall des Prüfschlägels aus, um das Testsignal stabil an das DUT auszugeben. Die Totzeit tot1 wird dabei so gewählt, dass die Leistungsverstärker 114 nicht zu früh in Betrieb geschaltet werden, um Energie zu sparen, aber auch nicht zu spät, so dass beim Aufprall des Prüfschlägels das Testsignal stabil an dem DUT anliegt.

Beim Auftreffen des Prüfschlägels 200 auf das DUT 130 (Zeitpunkt t4 in Fig. 3) tritt eine starke Beschleunigung (plötzliche Geschwindigkeitsabnahme) auf, die von dem Beschleunigungssensor 202 erfasst und durch den Mikrocontroller 205 ausgewertet wird. Diese beim Aufprall des Prüfschlägels 200 auftretende Beschleunigung ist wesentlich größer als die Beschleunigung zu Beginn des Schlags. Daher wird dieser Aufprall dadurch festgestellt, dass der Absolutwert der erfassten Beschleunigung mit einem vorbestimmten zweiten Schwellenwert a2 verglichen wird, der größer als der erste Schwellenwert ist. Überschreitet die erfasste Beschleunigung den zweiten Schwellenwert a2, wird ein drittes Steuersignal s3 an die Steuereinheit 150 übertragen, das anzeigt, dass ein Aufprall des Prüfschlägels 200 stattgefunden hat (Aufprallanzeigesignal). Durch dieses Aufprallanzeigesignal s3 wird in dem Echtzeitcontroller 104 wieder ein Timer in Gang gesetzt, welcher nach einer zweiten Totzeit tot2 (Ausschaltverzögerung) die Leistungsverstärker 114 wieder in den Energiesparmodus schaltet und somit die Messung beendet (Zeitpunkt t5 = t4 + tot2 in Fig. 3). Das entspricht dem ersten Energiesparmodus, in dem die übrigen Einheiten (z.B. die Signalgeneratoren 113, der Messempfänger 116, der Mikrocontroller 102 und die Anzeige 101) weiter in Betrieb bleiben.

Wie in Kurve c) von Fig. 3 dargestellt, kann es als Reaktion auf die mechanischen Erschütterungen, die durch den Schlag auf die Teststelle ausgelöst werden, zwischen den Zeitpunkten t4 und t5 zu einer erhöhten PIM kommen. Der Mikrocontroller 102 stellt fest, ob die gemessene PIM-Störung eine vorbestimmte Schwelle überschreitet, und gibt das Ergebnis über das Übertragungsmodul 103 als Ergebnissignal s4 an den Prüfschlägel 200 aus. Die Messung der PIM erfolgt dabei vorzugsweise dadurch, dass der jeweilige Spitzenwert eines Messvorgangs (ma bis me) ausgewertet wird (max-hold-Modus).

Nach Übersendung des Ergebnissignals s4 schaltet der Mikrocontroller 102 die Messvorrichtung 100 wieder in den Energiesparmodus (zweiter Energiesparmodus).

In dem Prüfschlägel 200 wertet der Mikrocontroller 205 das Ergebnissignal s4 aus und zeigt das Ergebnis über die Anzeigeelemente 203 an.

Die einfachste Variante einer Anzeige des Ergebnisses erfolgt über ein einziges Anzeigeelement, das z.B. aus einer Rot/Grün-Leuchtdiode (LED) gebildet sein kann. Zeigt das Ergebnissignal s4, dass die PIM-Störung unterhalb der vorbestimmten Schwelle geblieben ist, leuchtet die LED grün. Zeigt das Ergebnissignal s4 dagegen, dass die PIM-Störung die vorbestimmte Schwelle überschritten hat, leuchtet die LED rot. Alternativ können zwei getrennte Anzeigeelemente verwendet werden, z.B. eine grüne und eine rote Leuchtdiode.

Fig. 4 zeigt eine weitere mögliche Anordnung von einfachen Anzeigeelementen wie z.B. LEDs, die ein Ergebnis durch Leuchten oder Nicht-Leuchten anzeigen, sowie deren Zuordnung zu einem Ergebnis der Messung. Hierbei wird die gemessene PIM nicht nur mit einem einzelnen Schwellenwert verglichen, sondern mit vier Schwellenwerten unterschiedlicher Pegel (Pegel 1 bis Pegel 4). Fünf Anzeigeelemente A1 bis A5 zeigen an, 0b der gemessene Schwellwert unterhalb von Pegel 1, zwischen Pegel 1 und 2 usw. bis oberhalb von Pegel vier liegen. Dabei liegt ein Wert unterhalb von Pegel 2 im Toleranzbereich, was beispielsweise dadurch verdeutlicht werden kann, dass die Anzeigenelemente A1 und A2 grüne LEDs sind oder das Anzeigenelement A1 eine grüne LED und das Anzeigenelement A2 eine gelbe LED ist, während die Anzeigenelemente A3 bis A5 rote LEDs sind. Prinzipiell ist eine beliebige Anzahl von Anzeigenelementen vorstellbar, vorzugsweise ist ihre Anzahl gering, beispielsweise 10 oder weniger, in weiter bevorzugter Weise 5 oder weniger.

Als weitere Alternative können natürlich auch Leuchtbalken, Ziffernanzeigen oder ähnliche Anzeigelemente verwendet werden, mit denen üblicherweise Messergebnisse dargestellt werden.

Die für die Messung erforderlichen Parameter der Messvorrichtung 100, z.B. die Totzeiten tot1 und tot2 und die Pegel der Schwellenwerte, mit denen die gemessene PIM verglichen wird, können über Software in der Messvorrichtung 100 eingestellt werden.

Die Parameter des Prüfschlägels 200, z.B. die Schwellenwerte a1 und a2, mit denen die gemessene Beschleunigung verglichen wird, können über Eingabeelemente (z.B. eine Tastatur) an der Messvorrichtung 100 verändert und anschließend über die Funkstrecke 300 an die Fernbedienung übertragen werden.

In der beschriebenen Ausführungsform wird jeder Messzyklus durch Drücken des Tasters 204 gestartet. Alternativ kann die Messvorrichtung auch nicht direkt nach Übermitteln des Ergebnissignals s4 wieder in den Energiesparmodus geschaltet werden, sondern erst nach einer weiteren Totzeit, falls nicht zwischendurch erneut ein Steuersignal s2 empfangen wird. So kann der Bediener mehrere Testvorgänge hintereinander ausführen, ohne jedes Mal den Taster 204 betätigen zu müssen. Erst nach eine längeren Pause schaltet die Messvorrichtung 100 dann in den Energiesparmodus. Lediglich die leistungsintensiven Komponenten (in der beschriebenen Ausführungsform die Leistungsverstärker 114) werden am Ende jedes Messvorgangs (me) in den Energiesparmodus versetzt. In einer weiteren Alternative gibt es einen oder mehrere weitere Taster am Prüfschlägel mit denen der Bediener festlegen kann, wie viele Schläge er mit dem Prüfschlägel macht, bevor die Messvorrichtung wieder in den zweiten Energiesparmodus übergeht. In einer weiteren Alternative ist gar kein Taster 204 an dem Prüfschlägel vorhanden, so dass überhaupt nur der erste Energiesparmodus verwirklicht wird, bei dem nur die leistungsintensiven Komponenten am Ende jedes Messvorgangs in den Energiesparmodus versetzt werden.

Alternativ oder zusätzlich zu der Größe der Beschleunigung kann auch die Richtung der Beschleunigung erfasst werden. So hat die Beschleunigung beim Aufprall eine andere Richtung als diejenige zu Beginn des Schlags. Auch wenn die beiden Richtungen wegen einer möglichen Drehung des Prüfschlägels während des Schlags nicht direkt entgegengesetzt (Winkel 180°) sein müssen, hat die Beschleunigung dennoch beim Aufprall ein e hinreichend große Komponente in einer der Richtung als Beginn des Schlags entgegengesetzten Richtung

Der Bewegungssensor ist in der beschriebenen Ausführungsform durch einen Beschleunigungssensor verwirklicht. Beginn des Schlags oder Aufprall des Prüfschlägels können jedoch auch auf andere Weise erfasst werden. So kann beispielsweise mit einem Abstandssensor wie z.B. einem kapazitiven Abstandssensor der Abstand zwischen Prüfschlägel und DUT erfasst werden und Beginn des Schlags oder Aufprall des Prüfschlägels aus einer zeitlichen Änderung des Abstands detektiert werden. Auch Neigungs- oder Lagesensoren können verwendet werden.

Auch wenn in der beschriebenen Ausführungsform zwei Hochfrequenzsignale als Testsignal verwendet werden, ist die Erfindung nicht darauf eingeschränkt. Das Testsignal kann auch nur aus einem einzigen Signal oder aus mehr als zwei Signalen gebildet sein.

Die vorliegende Erfindung ist auch nicht auf die PIM-Messung eingeschränkt, sondern kann bei jedem Messverfahren eingesetzt werden, bei dem durch mechanische Erschütterung einer Teststelle ein messbares Ergebnis erzeugt wird, das anzeigt, ob die Teststelle ein vorbestimmtes Qualitätskriterium erfüllt oder nicht.

## Patentansprüche

1. Prüfschlägel (200) zum Ausüben eines Schlags auf einen Abschnitt eines zu prüfenden Objekts (130), wobei der Prüfschlägel (200) enthält:
einen Bewegungssensor (202) und
ein Übertragungsmodul (201) zum Übertragen eines Schlagbeginnanzeigesignals (s2), wenn der Bewegungssensor (202) einen Bewegungszustand erfasst, der einen Beginn eines Schlags mit dem Prüfschlägel (200) anzeigt, und/oder zum Übertragen eines Aufprallanzeigesignal (s3) wenn der Bewegungssensor (202) einen Bewegungszustand erfasst, der einen Aufprall des Prüfschlägels (200) anzeigt
wobei der Bewegungssensor (202) ein Beschleunigungssensor ist und **dadurch gekennzeichnet, dass**
das Übertragungsmodul (201) in der Lage ist, das Schlagbeginnanzeigesignal (s2) auszugeben, wenn der Beschleunigungssensor (202) eine Beschleunigung erfasst hat, die eine vorbestimmte erste Schwelle (a1) überschreitet, und/oder
das Übertragungsmodul (201) in der Lage ist, das Aufprallanzeigesignal (s3) auszugeben, wenn der Beschleunigungssensor eine Beschleunigung erfasst hat, die eine vorbestimmte zweite Schwelle (a2) überschreitet, und/oder
das Übertragungsmodul (201) in der Lage ist, das Aufprallanzeigesignal (s3) auszugeben, wenn der Beschleunigungssensor eine Beschleunigung erfasst hat, die eine Komponente in einer Richtung hat, die einer Richtung der Beschleunigung entgegengesetzt ist, die die erste Schwelle (a1) überschritten hat.

2. Prüfschlägel (200) gemäß Anspruch 1,
der weiter einen Taster (204) enthält,
wobei das Übertragungsmodul (201) in der Lage ist, ein Tasterbetätigungsanzeigesignal (s1) auszugeben, wenn der Taster (204) betätigt wurde.

3. Prüfschlägel (200) gemäß Anspruch 1 oder 2,
der weiter eine Anzeige (203) enthält,
wobei das Übertragungsmodul (201) in der Lage ist, ein Ergebnissignal (s4) zu empfangen, und
der Prüfschlägel (200) in der Lage ist, das durch das Ergebnissignal (s4) übermittelte Ergebnis auf der Anzeige (203) darzustellen.

4. Prüfschlägel (200) gemäß Anspruch 3,
bei dem die Anzeige (203) aus einer geringen Anzahl von einzelnen Anzeigeelementen (A1-A5), vorzugsweise von einzelnen Leuchtdioden gebildet ist, die abhängig von dem Ergebnissignal (s4) aufleuchten oder nicht, und/oder
bei dem die Anzeige (203) aus einem einzelnen Anzeigeelement, vorzugsweise einer einzelnen Leuchtdiode gebildet ist, das abhängig von dem Ergebnissignal (s4) in verschiedenen Farben leuchtet.

5. Testsystem, bestehend aus einem Prüfschlägel (200) gemäß einem der Ansprüche 1 bis 4 und einer Messvorrichtung (100) zum Erfassen einer Eigenschaft eines zu prüfenden Objekts (130), wobei die Messvorrichtung enthält:
eine Testsignalerzeugungseinheit (113) zum Erzeugen eines Testsignals,
eine Testsignalausgabeeinheit (114) zum Ausgeben des Testsignals an das zu prüfende Objekt (130),
eine Messsignalempfangseinheit (116) zum Empfangen eines als Reaktion auf die Ausgabe des Testsignals an das zu prüfende Objekt (130) entstehenden Messsignals,
eine Analysiereinheit (102) zum Bestimmen einer Größe eines der zu erfassenden Eigenschaft des zu prüfenden Objekts (130) entsprechenden Anteils des Messsignals,
ein Übertragungsmodul (103) zum Empfangen eines Steuersignals (s1-s3) von außen und
einen Echtzeitcontroller (104) der in der Lage ist, als Reaktion auf das von außen empfangene Steuersignal (s1-s3) einen Teil (114) der Komponenten der Messvorrichtung (100) zuverlässig in einer vorbestimmten Zeit, vorzugsweise in weniger als 100 ms, in weiter bevorzugter Weise vorzugsweise in weniger als 50 ms, in noch weiter bevorzugter Weise in weniger als 20 ms und in noch weiter bevorzugter Weise in weniger als 10 ms in den Energiesparmodus zu versetzen und/oder aus ihm herauszuholen.

6. Testsystem gemäß Anspruch 5, bei dem die Messvorrichtung (100) in der Lage ist,
eine Totzeit (tot1, tot2) zu erzeugen und
als Reaktion auf das von außen empfangene Steuersignal (s2-s3) einen Teil (114) seiner Komponenten um diese Totzeit (tot1, tot2) verzögert in den Energiesparmodus zu versetzen oder aus ihm herauszuholen.

7. Testsystem gemäß Anspruch 5 oder 6, bei dem die Messvorrichtung (100) in der Lage ist,
zu bestimmen, ob ein der zu erfassenden Eigenschaft des zu prüfenden Objekts (130) entsprechender Anteil des Messsignals eine oder mehrere vorbestimmte Schwelle(n) überschreitet, und
das Ergebnis der Bestimmung als Ergebnissignal (s4) über das Übertragungsmodul (103) auszugeben.

8. Testsystem gemäß einem der Ansprüche 5 bis 7, bei dem
die zu erfassende Eigenschaft des zu prüfenden Objekts (130) eine Nichtlinearität ist,
das Testsignal zwei hochfrequente Signale verschiedener Frequenzen enthält,
das Messsignal durch passive Intermodulation entstandene Signalanteile enthält und
die Messvorrichtung (100) in der Lage ist, zu bestimmen, ob ein durch passive Intermodulation entstandener Signalanteil eine oder mehrere vorbestimmte Schwelle(n) überschreitet.

9. Testsystem gemäß einem der Ansprüche 5 bis 8, bei dem die Messvorrichtung (100) in der Lage ist,
als Reaktion auf ein von dem Prüfschlägel (200) empfangenes Tasterbetätigungsanzeigesignal (s1) einen ersten Teil (101, 102, 113, 116) ihrer Komponenten aus einem Energiesparmodus herauszuholen, und/oder
als Reaktion auf ein von dem Prüfschlägel (200) empfangenes Schlagbeginnanzeigesignal (s2) einen zweiten Teil (114) ihrer Komponenten aus dem Energiesparmodus herauszuholen, wobei der zweite Teil (114) der Komponenten gegenüber dem ersten Teil (101, 102, 113, 116) der Komponenten einen höheren Leistungsverbrauch aufweist, und/oder
als Reaktion auf ein von dem Prüfschlägel (200) empfangenes Aufprallanzeigesignal (s3) den zweiten Teil (114) ihrer Komponenten in den Energiesparmodus zu versetzen, und/oder
nach Abschluss des Bestimmens einer Größe eines der zu erfassenden Eigenschaft des zu prüfenden Objekts (130) entsprechender Anteil des Messsignals den ersten Teil (101, 102, 113, 116) der Komponenten in den Energiesparmodus zu versetzen.

10. Testsystem gemäß Anspruch 9, bei dem die Messvorrichtung (100) in der Lage ist,
eine erste Totzeit (tot1) zu erzeugen und als Reaktion auf das Schlagbeginnanzeigesignal (s2) den zweiten Teil (114) ihrer Komponenten um die erste Totzeit (tot1) verzögert aus dem Energiesparmodus herauszuholen, und/oder
eine zweite Totzeit (tot2) zu erzeugen und als Reaktion auf das Aufprallanzeigesignal (s3) den zweiten Teil (114) ihrer Komponenten um die zweite Totzeit (tot2) verzögert in den Energiesparmodus zu versetzen.

11. Verfahren zum Erfassen einer Eigenschaft eines zu prüfenden Objekts (130) mit den Schritten:
(a) Anschließen einer Messvorrichtung eines Testsystems gemäß einem der Ansprüche 5 bis 10 an das zu prüfende Objekt (130)
(b) Ausüben eines Schlages mit einem Prüfschlägel (200) gemäß einem der Ansprüche 1 bis 4 auf einen zu testenden Abschnitt des zu prüfenden Objekts (130),
(c) Ermitteln einer Größe eines der zu erfassenden Eigenschaft des zu prüfenden Objekts (130) entsprechender Anteils des Messsignals.

12. Verfahren gemäß Anspruch 11, das zwischen Schritt (a) und Schritt (b) die folgenden Schritte enthält:
Betätigen eines Tasters (204) an dem Prüfschlägel (200),
Senden eines Tasterbetätigungsanzeigesignals (s1) über das Übertragungsmodul (201) als Reaktion auf das Betätigen des Tasters (204),
Herausholen des ersten Teils (101, 102, 113, 116) der Komponenten der Messvorrichtung (100) aus dem Energiesparmodus als Reaktion auf das über das Übertragungsmodul (103) empfangene Tasterbetätigungsanzeigesignal (s1).

13. Verfahren gemäß Anspruch 11 oder 12, bei dem Schritt (b) die folgenden Schritte enthält:
(b1) Erfassen einer Bewegung des Prüfschlägels (200) mit dem Bewegungssensor (202)
(b2) wenn der Bewegungssensor (202) einen Bewegungszustand erfasst, der einen Beginn eines Schlags mit dem Prüfschlägel (200) anzeigt, Ausgeben eines Schlagbeginnanzeigesignals (s2) über das Übertragungsmodul (201) und
(b3) Herausholen des zweiten Teils (114) der Komponenten der Messvorrichtung (100) aus dem Energiesparmodus als Reaktion auf das über das Übertragungsmodul (103) empfangene Schlagbeginnanzeigesignal (s2).
wobei Schritt (b3) vorzugsweise die folgenden Schritte enthält:
Erzeugen einer ersten Totzeit (tot1) und
Herausholen des zweiten Teils (114) der Komponenten der Messvorrichtung (100) aus dem Energiesparmodus um die erste Totzeit (tot1) verzögert nach dem Empfang des Schlagbeginnanzeigesignals (s2).

14. Verfahren gemäß einem der Ansprüche 11 bis 13, bei dem Schritt (b) die folgenden Schritte enthält:
(b4) Erfassen einer Bewegung des Prüfschlägels (200) mit dem Bewegungssensor (202)
(b5) wenn der Bewegungssensor (202) einen Bewegungszustand erfasst, der einen Aufprall des Prüfschlägels (200) anzeigt, Ausgeben eines Aufprallanzeigesignals (s3) über das Übertragungsmodul (201) und
(b6) Versetzen des zweiten Teils (114) der Komponenten der Messvorrichtung (100) in den Energiesparmodus als Reaktion auf das über das Übertragungsmodul (103) empfangene Aufprallanzeigesignal (s3),
wobei Schritt (b6) vorzugsweise die folgenden Schritte enthält:
Erzeugen einer zweiten Verzögerungszeit (tot2) und
Versetzen des zweiten Teils (114) der Komponenten der Messvorrichtung (100) in den Energiesparmodus um die zweite Verzögerungszeit (tot2) verzögert nach dem Empfang des Aufprallanzeigesignals (s3).

15. Verfahren gemäß einem der Ansprüche 11 bis 14, bei dem Schritt (b) die folgenden Schritte enthält:
(b7) Bestimmen, ob ein der zu erfassenden Eigenschaft des zu prüfenden Objekts (130) entsprechender Anteil des Messsignals eine vorbestimmte Schwelle überschreitet,
(b8) Ausgeben eines Ergebnisses der Bestimmung als Ergebnissignal (s4) über das Übertragungsmodul (103),
(b9) Versetzen des ersten Teils (113, 116) der Komponenten der Messvorrichtung (100) in den Energiesparmodus nach dem Ausgeben des Ergebnissignals (s4) und
(b10) Anzeigen des Ergebnisses der Bestimmung auf der Anzeige (203) des Prüfschlägels.

## Claims

1. A test hammer (200) to carry out a strike on a section of a device under test (130), wherein the test hammer (200) comprises:
a motion sensor (202), and
a transmission module (201) to transmit a strike start indication signal (s2) if the motion sensor (202) detects a motion state which indicates a start of a strike with the test hammer (200), and/or to transmit an impact indication signal (s3) if the motion sensor (202) detects a motion state which indicates an impact of the test hammer (200),
wherein the motion sensor (202) is an acceleration sensor, and **characterized in that**
the transmission module (201) is able to output the strike start indication signal (s2) if the acceleration sensor (202) has detected an acceleration which exceeds a predetermined first threshold (a1), and/or
the transmission module (201) is able to output the impact indication signal (s3) if the acceleration sensor has detected an acceleration which exceeds a predetermined second threshold (a2), and/or
the transmission module (201) is able to output the impact indication signal (s3) if the acceleration sensor has detected an acceleration which has a component in a direction which is opposite to a direction of the acceleration which has exceeded the first threshold (a1).

2. The test hammer (200) as claimed in claim 1,
which furthermore comprises a button (204),
wherein the transmission module (201) is able to output a button actuation indication signal (s1) if the button (204) has been actuated.

3. The test hammer (200) as claimed in claims 1 or 2,
which furthermore comprises a display (203),
wherein the transmission module (201) is able to receive a result signal (s4), and
the test hammer (200) is able to present the result conveyed by the result signal (s4) on the display (203).

4. The test hammer (200) as claimed in claim 3,
wherein the display (203) is formed from a small number of individual display elements (A1-A5), preferably from individual light-emitting diodes which illuminate or do not illuminate depending on the result signal (s4), and/or
wherein the display (203) is formed from an individual display element, preferably an individual light-emitting diode, which illuminates in different colors depending on the result signal (s4).

5. A test system, consisting of a test hammer (200) as claimed in one of claims 1 to and a measuring apparatus (100) for measuring a property of a device under test (130), wherein the measuring apparatus (100) includes:
a test signal generating unit (113) for generating a test signal,
a test signal output unit (114) for outputting the test signal to the device under test (130),
a measuring signal receiving unit (116) for receiving a measuring signal produced in response to the output of the test signal to the device under test (130),
an analyzing unit (102) for determining a quantity of a component of the measuring signal corresponding to the property to be measured of the device under test (130),
a transmission module (103) for receiving a control signal (s1-s3) from an external source, and
a real-time controller (104) which is able to switch and/or retrieve a portion (114) of the components of the measuring apparatus (100) reliably to and/or from an energy-saving mode in a predetermined time, preferably in less than 100 ms, in a further preferred manner in less than 50 ms, in an even further preferred manner in less than 20 ms, and in an even further preferred manner in less than 10 ms, in response to the control signal (sl-s3) received from an external source.

6. The test system as claimed in claim 5, wherein the measuring apparatus (100) is able
to generate a delay (tot1, tot2), and
to switch or retrieve a portion (114) of its components, delayed by this delay (tot1, tot2), to or from the energy-saving mode in response to the control signal (s2-s3) received from an external source.

7. The test system as claimed in claim 5 or 6, wherein the measuring apparatus (100) is able
to determine whether a component of the measuring signal corresponding to the property to be measured of the device under test (130) exceeds one or more predetermined threshold(s), and
to output the result of the determination as a result signal (s4) via the transmission module (103).

8. The test system as claimed in one of claims 5 to 7, wherein
the property to be measured of the device under test (130) is a non-linearity,
the test signal comprises two high-frequency signals having different frequencies,
the measuring signal comprises signal components produced by passive intermodulation, and
the measuring apparatus (100) is able to determine whether a signal component produced by passive intermodulation exceeds one or more predetermined threshold(s).

9. The test system as claimed in one of claims 5 to 8, wherein the measuring apparatus (100) is able
to retrieve a first portion (101, 102, 113, 116) of its components from an energy-saving mode in response to a button actuation indication signal (s1) received from the test hammer (200), and/or
to retrieve a second portion (114) of its components from the energy-saving mode in response to a strike start indication signal (s2) received from the test hammer (200), wherein the second portion (114) of the components has a higher power consumption than the first portion (101, 102, 113, 116) of the components, and/or
to switch the second portion (114) of its components to the energy-saving mode in response to an impact indication signal (s3) received from the test hammer (200), and/or,
following the completion of the determination of a quantity of a component of the measuring signal corresponding to the property to be measured of the device under test (130), to switch the first portion (101, 102, 113, 116) of the components to the energy-saving mode.

10. The test system as claimed in claim 9, wherein the measuring apparatus (100) is able
to generate a first delay (tot1) and to retrieve the second portion (114) of its components, delayed by the first delay (tot1), from the energy-saving mode in response to the strike start indication signal (s2), and/or
to generate a second delay (tot2) and to switch the second portion (114) of its components, delayed by the second delay (tot2), to the energy-saving mode in response to the impact indication signal (s3).

11. A method for measuring a property of a device under test (130) with the steps:
(a) connecting a test system as claimed in one of claims 5 to 10 to the device under test (130),
(b) carrying out a strike with a test hammer (200) as claimed in one of claims 1 to 4 on a section to be tested of the device under test (130),
(c) determining a quantity of a component of the measuring signal corresponding to the property to be measured of the device under test (130).

12. The method as claimed in claim 11, which comprises the following steps between step (a) and step (b):
actuating a button (204) on the test hammer (200),
transmitting a button actuation indication signal (s1) via the transmission module (201) in response to the actuation of the button (204),
retrieving the first portion (101, 102, 113, 116) of the components of the measuring apparatus (100) from the energy-saving mode in response to the button actuation indication signal (s1) received via the transmission module (103).

13. The method as claimed in claim 11 or 12, in which step (b) comprises the following steps:
(b1) detecting a motion of the test hammer (200) with the motion sensor (202),
(b2) if the motion sensor (202) detects a motion state which indicates a start of a strike with the test hammer (200), outputting a strike start indication signal (s2) via the transmission module (201), and
(b3) retrieving the second portion (114) of the components of the measuring apparatus (100) from the energy-saving mode in response to the strike start indication signal (s2) received via the transmission module (103),
wherein step (b3) preferably comprises the following steps:
generating a first delay (tot1), and
retrieving the second portion (114) of the components of the measuring apparatus (100) from the energy-saving mode, delayed by the first delay (tot1), following the reception of the strike start indication signal (s2).

14. The method as claimed in one of claims 11 to 13, in which step (b) comprises the following steps:
(b4) detecting a motion of the test hammer (200) with the motion sensor (202),
(b5) if the motion sensor (202) detects a motion state which indicates an impact of the test hammer (200), outputting an impact indication signal (s3) via the transmission module (201), and
(b6) switching the second portion (114) of the components of the measuring apparatus (100) to the energy-saving mode in response to the impact indication signal (s3) received via the transmission module (103),
wherein step (b6) preferably comprises the following steps:
generating a second delay time (tot2), and
switching the second portion (114) of the components of the measuring apparatus (100) to the energy-saving mode, delayed by the second delay time (tot2), following the reception of the impact indication signal (s3).

15. The method as claimed in one of claims 11 to 14, in which step (b) comprises the following steps:
(b7) determining whether a component of the measuring signal corresponding to the property to be measured of the device under test (130) exceeds a predetermined threshold,
(b8) outputting a result of the determination as a result signal (s4) via the transmission module (103),
(b9) switching the first portion (113, 116) of the components of the measuring apparatus (100) to the energy-saving mode following the output of the result signal (s4), and
(b10) displaying the result of the determination on the display (203) of the test hammer.

## Revendications

1. Maillet de contrôle (200) destiné à appliquer un coup sur une section d'un objet (130) à contrôler, dans lequel le maillet de contrôle (200) contient :
un capteur de mouvement (202) et
un module de transmission (201) destiné à transmettre un signal d'indication de début de coup (s2), lorsque le capteur de mouvement (202) détecte un état de mouvement, qui indique un début d'un coup avec le maillet de contrôle (200), et/ou à transmettre un signal d'indication de choc (s3), lorsque le capteur de mouvement (202) détecte un état de mouvement qui indique un choc du maillet de contrôle (200)
dans lequel le capteur de mouvement (202) est un capteur d'accélération, et **caractérisé en ce que**
le module de transmission (201) est en mesure d'émettre le signal d'indication de début de coup (s2), lorsque le capteur d'accélération (202) a détecté une accélération qui dépasse un premier seuil (a1) prédéfini, et/ou
le module de transmission (201) est en mesure d'émettre le signal d'indication de choc (s3), lorsque le capteur d'accélération a détecté une accélération qui dépasse un deuxième seuil (a2) prédéfini, et/ou
le module de transmission (201) est en mesure d'émettre le signal d'indication de choc (s3), lorsque le capteur d'accélération a détecté une accélération qui présente une composante dans une direction qui est opposée à une direction de l'accélération qui a dépassé le premier seuil (a1).

2. Maillet de contrôle (200) selon la revendication 1,
qui contient en outre un bouton-poussoir (204),
dans lequel le module de transmission (201) est en mesure d'émettre un signal d'indication d'actionnement de bouton-poussoir (s1) lorsque le bouton-poussoir (204) a été actionné.

3. Maillet de contrôle (200) selon la revendication 1 ou 2,
qui contient en outre un écran (203),
dans lequel le module de transmission (201) est en mesure de recevoir un signal de résultat (s4), et
le maillet de contrôle (200) est en mesure de représenter sur l'écran (203) le résultat transmis par le signal de résultat (s4).

4. Maillet de contrôle (200) selon la revendication 3,
où l'écran (203) est formé d'un petit nombre d'éléments d'écran (A1-A5) individuels, de préférence de diodes électroluminescentes individuelles, qui s'allument ou non en fonction du signal de résultat (s4), et/ou
où l'écran (203) est formé d'un élément d'écran individuel, de préférence d'une diode électroluminescente individuelle, qui s'allume en différentes couleurs en fonction du signal de résultat (s4) .

5. Système de test, constitué d'un maillet de contrôle (200) selon l'une quelconque des revendications 1 à 4 et d'un dispositif de mesure (100) destiné à détecter une propriété d'un objet (130) à contrôler, dans lequel le dispositif de mesure contient :
une unité de génération de signal de test (113) destinée à générer un signal de test,
une unité d'émission de signal de test (114) destinée à émettre le signal de test vers l'objet (130) à contrôler,
une unité de réception de signal de mesure (116) destinée à recevoir un signal de mesure produit en réponse à l'émission du signal de test vers l'objet (130) à contrôler,
une unité d'analyse (102) destinée à déterminer une grandeur d'une fraction du signal de mesure correspondant à la propriété à détecter de l'objet (130) à contrôler,
un module de transmission (103) destiné à recevoir un signal de commande (s1-s3) de l'extérieur et
un contrôleur en temps réel (104), qui est en mesure, en réponse au signal de commande (sl-s3) reçu de l'extérieur, d'amener une partie (114) des composants du dispositif de mesure (100) de manière fiable en un temps prédéfini, de préférence en moins de 100 ms, plus préférablement en moins de 50 ms, de manière encore préférée en moins de 20 ms et de manière encore davantage préférée en moins de 10 ms dans le mode économie d'énergie et/ou de l'en faire sortir.

6. Système de test selon la revendication 5, où le dispositif de mesure (100) est en mesure
de générer un temps mort (tot1, tot2) et
en réponse au signal de commande (s2-s3) reçu de l'extérieur, d'amener une partie (114) de ses composants de manière retardée de ce temps mort (tot1, tot2) dans le mode économie d'énergie ou de l'en faire sortir.

7. Système de test selon la revendication 5 ou 6, où le dispositif de mesure (100) est en mesure
de déterminer si une fraction du signal de mesure correspondant à la propriété à détecter de l'objet (130) à contrôler dépasse un ou plusieurs seuil(s) prédéfini(s), et
d'émettre le résultat de la détermination en tant que signal de résultat (s4) par l'intermédiaire du module de transmission (103).

8. Système de test selon l'une quelconque des revendications 5 à 7, où
la propriété à détecter de l'objet (130) à contrôler est une non-linéarité,
le signal de test contient deux signaux à haute fréquence de différentes fréquences,
le signal de mesure contient des fractions de signal produites par intermodulation passive et
le dispositif de mesure (100) est en mesure de déterminer si une fraction de signal produite par intermodulation passive dépasse un ou plusieurs seuil(s) prédéfini(s).

9. Système de test selon l'une quelconque des revendications 5 à 8, où le dispositif de mesure (100) est en mesure
en réponse à un signal d'indication d'actionnement de bouton-poussoir (s1) reçu du maillet de contrôle (200), de faire sortir une première partie (101, 102, 113, 116) de ses composants d'un mode économie d'énergie, et/ou
en réponse à un signal d'indication de début de coup (s2) reçu du maillet de contrôle (200), de faire sortir une deuxième partie (114) de ses composants du mode économie d'énergie, dans lequel la deuxième partie (114) des composants présente une consommation de puissance plus élevée par rapport à la première partie (101, 102, 113, 116) des composants, et/ou
en réponse à un signal d'indication de choc (s3) reçu du maillet de contrôle (200), d'amener la deuxième partie (114) de ses composants dans le mode économie d'énergie, et/ou
à la fin de la détermination d'une grandeur d'une fraction du signal de mesure correspondant à la propriété à détecter de l'objet (130) à contrôler, d'amener la première partie (101, 102, 113, 116) des composants dans le mode économie d'énergie.

10. Système de test selon la revendication 9, où le dispositif de mesure (100) est en mesure
de générer un premier temps mort (tot1) et, en réponse au signal d'indication de début de coup (s2), de faire sortir la deuxième partie (114) de ses composants de manière retardée du premier temps mort (tot1) du mode économie d'énergie, et/ou
de générer un deuxième temps mort (tot2) et, en réponse au signal d'indication de choc (s3), d'amener la deuxième partie (114) de ses composants de manière retardée du deuxième temps mort (tot2) dans le mode économie d'énergie.

11. Procédé pour détecter une propriété d'un objet (130) à contrôler avec les étapes :
(a) de raccordement d'un dispositif de mesure d'un système de test selon l'une quelconque des revendications 5 à 10 à l'objet (130) à contrôler
(b) d'application d'un coup avec un maillet de contrôle (200) selon l'une quelconque des revendications 1 à 4 sur une section à tester de l'objet (130) à contrôler,
(c) de détermination d'une grandeur d'une fraction du signal de mesure correspondant à la propriété à détecter de l'objet (130) à contrôler.

12. Procédé selon la revendication 11, qui contient entre l'étape (a) et l'étape (b) les étapes suivantes :
l'actionnement d'un bouton-poussoir (204) sur le maillet de contrôle (200),
l'envoi d'un signal d'indication d'actionnement de bouton-poussoir (s1) par l'intermédiaire du module de transmission (201) en réponse à l'actionnement du bouton-poussoir (204),
le fait de faire sortir la première partie (101, 102, 113, 116) des composants du dispositif de mesure (100) du mode économie d'énergie en réponse au signal d'indication d'actionnement de bouton-poussoir (s1) reçu par l'intermédiaire du module de transmission (103).

13. Procédé selon la revendication 11 ou 12, où l'étape (b) contient les étapes suivantes :
(b1) la détection d'un mouvement du maillet de contrôle (200) avec le capteur de mouvement (202)
(b2) lorsque le capteur de mouvement (202) détecte un état de mouvement qui indique un début d'un coup avec le maillet de contrôle (200), l'émission d'un signal d'indication de début de coup (s2) par l'intermédiaire du module de transmission (201) et
(b3) le fait de faire sortir la deuxième partie (114) des composants du dispositif de mesure (100) du mode économie d'énergie en réponse au signal d'indication de début de coup (s2) reçu par l'intermédiaire du module de transmission (103)
dans lequel l'étape (b3) contient de préférence les étapes suivantes :
la génération d'un premier temps mort (tot1) et
le fait de faire sortir la deuxième partie (114) des composants du dispositif de mesure (100) du mode économie d'énergie de manière retardée du premier temps mort (tot1) après la réception du signal d'indication de début de coup (s2).

14. Procédé selon l'une quelconque des revendications 11 à 13, où l'étape (b) contient les étapes suivantes :
(b4) la détection d'un mouvement du maillet de contrôle (200) avec le capteur de mouvement (202)
(b5) lorsque le capteur de mouvement (202) détecte un état de mouvement qui indique un choc du maillet de contrôle (200), l'émission d'un signal d'indication de choc (s3) par l'intermédiaire du module de transmission (201) et
(b6) le fait d'amener la deuxième partie (114) des composants du dispositif de mesure (100) dans le mode économie d'énergie en réponse au signal d'indication de choc (s3) reçu par l'intermédiaire du module de transmission (103),
dans lequel l'étape (b6) contient de préférence les étapes suivantes :
la génération d'un deuxième temps de retard (tot2) et
le fait d'amener la deuxième partie (114) des composants du dispositif de mesure (100) dans le mode économie d'énergie de manière retardée du deuxième temps de retard (tot2) après la réception du signal d'indication de choc (s3).

15. Procédé selon l'une quelconque des revendications 11 à 14, où l'étape (b) contient les étapes suivantes :
(b7) le fait de déterminer si une fraction du signal de mesure correspondant à la propriété à détecter de l'objet (130) à contrôler dépasse un seuil prédéfini,
(b8) l'émission d'un résultat de la détermination en tant que signal de résultat (s4) par l'intermédiaire du module de transmission (103),
(b9) le fait d'amener la première partie (113, 116) des composants du dispositif de mesure (100) dans le mode économie d'énergie après l'émission du signal de résultat (s4) et
(b10) l'affichage du résultat de la détermination sur l'écran (203) du maillet de contrôle.
